(19) Europäisches Patentamt
European Patent Office
Office européen des brevets

(11) **EP 3 667 452 B1**

(12) **FASCICULE DE BREVET EUROPEEN**

(45) Date de publication et mention
de la délivrance du brevet:
**27.01.2021 Bulletin 2021/04**

(51) Int Cl.:
***G05D 1/06*** *(2006.01)*   ***G01C 23/00*** *(2006.01)*

(21) Numéro de dépôt: **19203974.1**

(22) Date de dépôt: **18.10.2019**

(54) **PROCÉDÉ ET DISPOSITIF D'AIDE AU PILOTAGE D'UN AÉRONEF LORS D'UNE APPROCHE D'UNE PISTE D'ATTERRISSAGE EN VUE D'UN ATTERRISSAGE**

VERFAHREN UND VORRICHTUNG ZUR UNTERSTÜZUNG BEIM STEUERN EINES LUFTFAHRZEUGS BEIM LANDEANFLUG AUF EINE LANDEBAHN

METHOD AND DEVICE TO ASSIST WITH PILOTING AN AIRCRAFT DURING AN APPROACH OF A RUNWAY FOR LANDING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2018 FR 1872613**

(43) Date de publication de la demande:
**17.06.2020 Bulletin 2020/25**

(73) Titulaire: **AIRBUS OPERATIONS (S.A.S.)**
**31060 Toulouse (FR)**

(72) Inventeur: **MERE, Jean-Claude**
**31060 TOULOUSE Cedex 9 (FR)**

(74) Mandataire: **Gicquel, Olivier Yves Gérard**
**Airbus Opérations (S.A.S)**
**XIF - M0101/1**
**316, route de Bayonne**
**31060 Toulouse Cedex (FR)**

(56) Documents cités:
**EP-A1- 2 161 540      GB-A- 912 214**
**JP-A- 2013 124 911**

## Description

La présente invention concerne un procédé et un dispositif d'aide au pilotage d'un aéronef lors d'une phase d'approche de l'aéronef, en vue d'un atterrissage sur la piste d'atterrissage d'un aéroport. La présentation invention se rapporte à la gestion d'énergie d'un aéronef le long de sa trajectoire en vue d'atteindre un point précis.

On connait des documents brevets, tels que JP2013124911 et EP2161540, qui décrivent la gestion d'énergie d'un aéronef.

On sait que, lors d'une phase d'approche, l'équipage d'un aéronef, en particulier d'un avion de transport, doit obtenir, en conformité avec des recommandations internationales, un état stabilisé de l'aéronef à un point de stabilisation de l'approche (repère d'approche finale) ou FAF (« Final Approach Fix » en anglais) qui est généralement fixé à 1000 pieds (305 m environ) au-dessus du seuil de la piste d'atterrissage.

Pour être dans un état stabilisé, l'aéronef doit être dans une configuration dite d'atterrissage, la commande de la poussée doit être adaptée à la configuration d'atterrissage, la vitesse verticale ne doit pas être excessive, et toutes les vérifications doivent être réalisées. Dans ce contexte, la configuration d'atterrissage se réfère à la situation suivante : le train d'atterrissage est sorti, les volets sont sortis dans une position d'atterrissage et les aérofreins sont rétractés.

Actuellement, lors d'une approche guidée, dans laquelle l'aéronef suit des consignes du contrôleur aérien, l'équipage d'un aéronef ne dispose d'aucune référence de trajectoire latérale ou verticale vers le point FAF pour lui indiquer comment faire évoluer l'altitude, la vitesse et la configuration de l'aéronef et comment dissiper l'énergie de l'aéronef de façon appropriée jusqu'à la piste d'atterrissage. L'équipage doit gérer l'évolution énergétique jusqu'à la piste d'atterrissage en manuel, à partir d'informations de haut niveau telles que l'altitude courante, la vitesse courante, la distance directe au point de stabilisation de l'approche ou au point FAF. Ces informations sont difficiles à interpréter pour décider quelles actions prendre en termes de pilotage pour gérer l'énergie résiduelle de l'aéronef régulièrement jusqu'à la piste d'atterrissage.

Ainsi, lors d'une approche guidée, la gestion de l'énergie en descente et en approche est aujourd'hui laissée à la discrétion de l'équipage de l'aéronef qui doit évaluer la situation énergétique de l'aéronef et mener des actions de pilotage adéquates pour gérer les éventuels cas de sur-énergie ou de sous-énergie résultant des consignes du contrôleur aérien ATC (« Air Traffic Control » en anglais). En effet, ces consignes, qui visent à espacer les aéronefs pour assurer la sécurité du trafic aérien, ne respectent pas forcément les capacités ou les performances de l'aéronef et peuvent conduire à des situations où l'aéronef se retrouve dans des conditions difficiles pour finir l'approche de façon nominale.

Lorsque l'aéronef est stabilisé, l'équipage assure que l'aéronef reste à une vitesse dite d'approche et surveille toute perte de stabilité jusqu'à ce que l'aéronef atteigne le seuil de la piste. Si l'aéronef n'est pas stabilisé au point de stabilisation, ou devient instable, l'équipage doit initier une remise des gaz avec un échec de la procédure d'approche.

Par conséquent, si l'équipage applique un taux de perte d'énergie excessif, l'aéronef devra utiliser un surplus de carburant pour pouvoir atteindre le point de stabilisation cible à la bonne vitesse.

En revanche, si un taux de perte d'énergie insuffisant est appliqué à l'aéronef, il va atteindre le point de stabilisation cible avec une énergie excessive et sera forcé d'initier une remise des gaz avec un échec de la procédure d'approche.

Par conséquent, une telle gestion usuelle de la perte d'énergie de l'aéronef à l'approche lors de la phase d'atterrissage n'est donc pas complètement satisfaisante, notamment pour des raisons de charge de travail de l'équipage et de précision non optimale.

La présente invention a pour objet de remédier à cet inconvénient. Elle concerne un procédé, revendiqué dans la revendication 1, d'aide au pilotage d'un aéronef lors d'une approche de l'aéronef, en vue d'un atterrissage sur une piste d'atterrissage.

Ainsi, grâce à la présente invention, une indication simple permet au pilote d'avoir une estimation de la sur-énergie de l'aéronef lors d'une procédure d'approche selon une stratégie d'approche en vue d'un atterrissage sur une piste d'atterrissage. En effet, la forme de l'ellipse donne une indication sur l'importance de la sur-énergie de l'aéronef. La variation de la forme de l'ellipse donne une indication sur la variation de la sur-énergie à dissiper. Le pilote peut alors décider d'actions à mener pour manœuvrer l'aéronef de manière appropriée afin de dissiper l'énergie en excédent.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- La figure 1 est le schéma synoptique d'un mode de réalisation particulier d'un dispositif d'aide au pilotage ;
- La figure 2 est le schéma synoptique d'un mode de réalisation particulier d'un procédé d'aide au pilotage ;
- La figure 3a est un premier graphique illustrant un profil d'approche standard ;
- La figure 3b est un deuxième graphique illustrant le profil d'approche standard ;
- La figure 4 représente une ellipse déterminée par le dispositif d'aide au pilotage ;
- La figure 5 représente un premier schéma illustrant la détermination de l'ellipse selon un premier état courant de l'aéronef ;
- La figure 6 représente un deuxième schéma illustrant la détermination de l'ellipse selon un deuxième état courant de l'aéronef ;

- La figure 7 représente un troisième schéma illustrant la détermination de l'ellipse selon un troisième état courant de l'aéronef ; et
- La figure 8 représente un quatrième schéma illustrant la détermination de l'ellipse selon un quatrième état courant de l'aéronef.

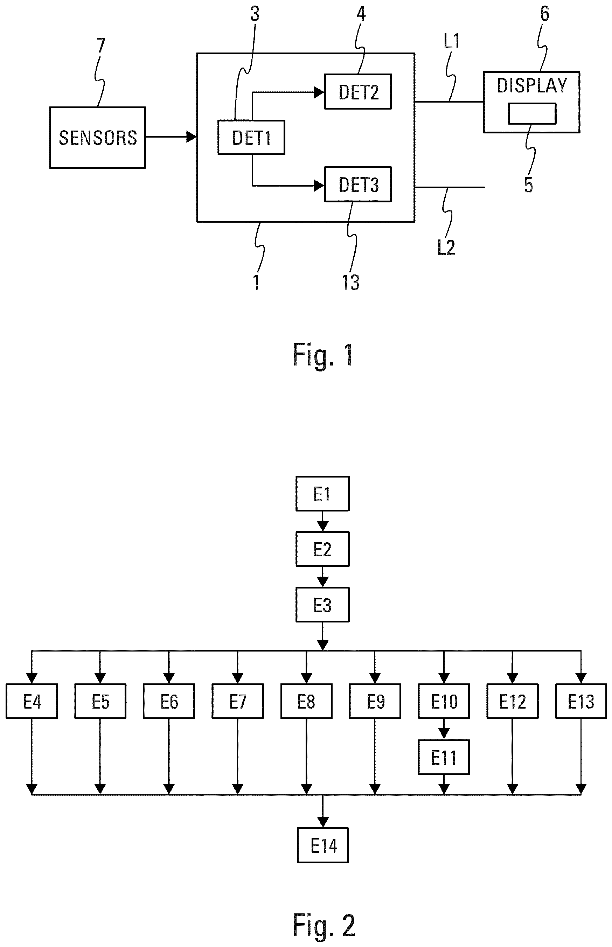

Le dispositif 1, permettant d'illustrer l'invention et représenté de façon schématique sur la figure 1, est un mode de réalisation du dispositif d'aide au pilotage 1 d'un aéronef AC lors d'une approche de l'aéronef AC, en vue d'un atterrissage sur une piste d'atterrissage 2. De préférence, l'approche correspond à une approche guidée (« vectored approach » en anglais).

Le dispositif d'aide au pilotage 1, embarqué sur l'aéronef AC, peut être mis en œuvre par un système de gestion de vol FMS (« Flight Management System » en anglais). Le système FMS peut être relié de manière classique à un ensemble 7 de capteurs SENSORS de l'aéronef AC et au moins un module d'affichage DISPLAY (DISPLAY pour « display module » en anglais) 6 du poste de pilotage permettant d'afficher un plan de vol et des trajectoires. Ces différents écran peuvent également permettre à un pilote, via une interface homme-machine de charger un plan de vol avant le vol ou de modifier le plan de vol pendant le vol.

Le dispositif d'aide au pilotage 1 comporte un module de détermination DET1 (DET pour « détermination module » en anglais) 3 configuré pour déterminer un état courant de l'aéronef AC. L'état courant de l'aéronef AC est spécifique d'un état énergétique courant caractérisé par des paramètres. Les paramètres peuvent correspondre à une position courante Pc de l'aéronef AC, une vitesse courante de l'aéronef AC et une configuration courante de l'aéronef AC.

Des paramètres de l'état courant, tels que la position courante Pc ou la vitesse courante peuvent être déterminés à partir de données provenant de l'ensemble 7 de capteurs de l'aéronef AC.

À titre d'exemple, l'aéronef AC peut se présenter selon les configurations suivantes :

- une configuration dans laquelle l'aéronef AC est en vol avec des trains d'atterrissage entrés ;
- une configuration dans laquelle l'aéronef AC est en vol avec les trains d'atterrissage sortis ;
- une configuration dans laquelle l'aéronef AC est dans une configuration de pré-atterrissage ;
- une configuration dans laquelle l'aéronef AC est dans une configuration d'atterrissage.

Le dispositif d'aide au pilotage 1 comporte aussi un module de détermination DET2 4 configuré pour déterminer une première distance dstd entre un état cible et l'état courant à partir d'une première stratégie d'approche.

La première stratégie d'approche peut correspondre à une stratégie d'approche standard.

L'état cible correspond à un état énergétique cible de stabilisation que l'aéronef AC est supposé avoir au moment où il franchit le seuil de la piste d'atterrissage 2. Comme pour l'état courant de l'aéronef AC, l'état cible est spécifique d'un état énergétique cible caractérisé par des paramètres dont une position cible PFAF de l'aéronef AC, une vitesse cible de l'aéronef AC et une configuration cible de l'aéronef AC.

Un état énergétique est caractéristique de l'énergie de l'aéronef AC. L'énergie de l'aéronef AC est égale à la somme de l'énergie potentielle de l'aéronef AC et de l'énergie cinétique de l'aéronef AC.

La première distance dstd est déterminée en fonction d'un profil d'approche caractéristique de la première stratégie d'approche.

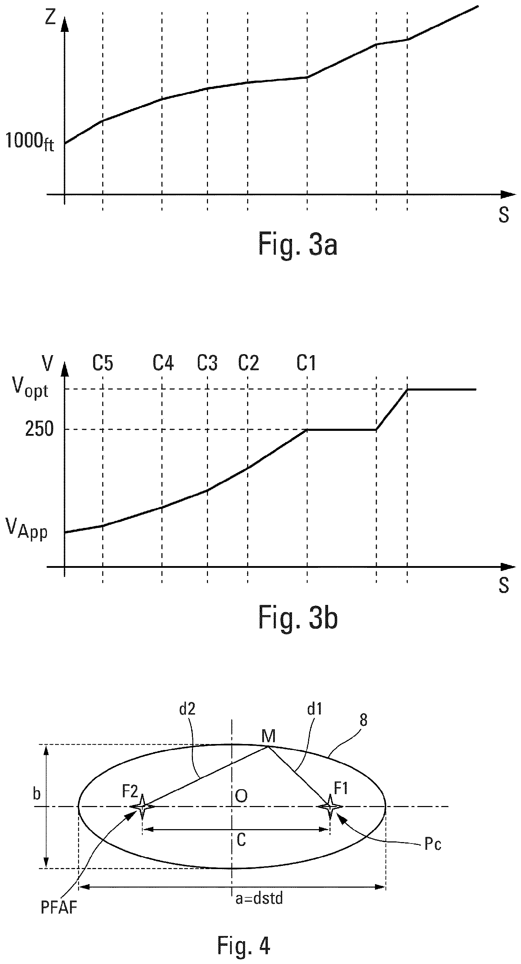

Les figures 3a et 3b représente un profil d'approche standard d'un aéronef AC pour une stratégie d'approche standard. La figure 3a représente l'altitude Z que doit présenter l'aéronef AC à une distance s de la position cible PFAF pour qu'il soit conforme à la procédure d'approche standard. La figure 3b représente la vitesse que doit présenter l'aéronef AC à une distance s de la position cible PFAF pour qu'il soit conforme à la procédure d'approche standard. Par ailleurs, la figure 3b indique la configuration (C1, C2, C3, C4, C5) dans laquelle l'aéronef AC doit se présenter à une distance s de la position cible PFAF pour qu'il soit conforme à la procédure d'approche standard.

Ce profil d'approche est calculé à rebours à partir de l'état cible en appliquant une succession de stratégies prédéterminées, dont l'ensemble forme la première stratégie d'approche. La succession de stratégies prédéterminées permettent de déduire les états successifs par lesquels l'aéronef AC doit passer pour réaliser une approche stabilisée « dans les règles de l'art ». Ce profil, qui correspond à une procédure d'approche standard immuable, peut être intégré dans une table pour fournir en temps réel l'ensemble des paramètres que l'aéronef AC devrait présenter lors d'une approche stabilisée, en fonction de l'un quelconque de ces paramètres correspondant à l'état énergétique courant de l'aéronef AC.

Par exemple, si l'aéronef AC évolue à une altitude donnée, la table correspondant au profil d'approche standard fournit les autres paramètres que l'aéronef AC devrait avoir sur un profil d'approche standard. En particulier, la table fournit la première distance dstd à laquelle l'aéronef AC devrait être par rapport à la position cible PFAF, mais aussi la vitesse qu'il devrait avoir, la configuration aérodynamique dans laquelle l'aéronef AC devrait se trouver.

Ainsi, le module de détermination 4 permet, à chaque instant, pour un état courant de l'aéronef AC, de connaître la première distance dstd dont ledit aéronef AC a besoin pour dissiper son énergie lors d'une approche standard.

Le module de détermination 4 est également configuré pour déterminer une première ellipse 8 comprise dans un plan horizontal dans lequel évolue l'aéronef AC. La première ellipse 8 est formée de points déterminés de façon qu'une somme, d'une part, d'une distance d1 entre la position courante Pc de l'aéronef AC et les points de la première ellipse 8 et, d'autre part, d'une distance d2 entre les points de la première ellipse 8 et une projection sur le plan horizontal de la position cible PFAF est égale à la première distance dstd.

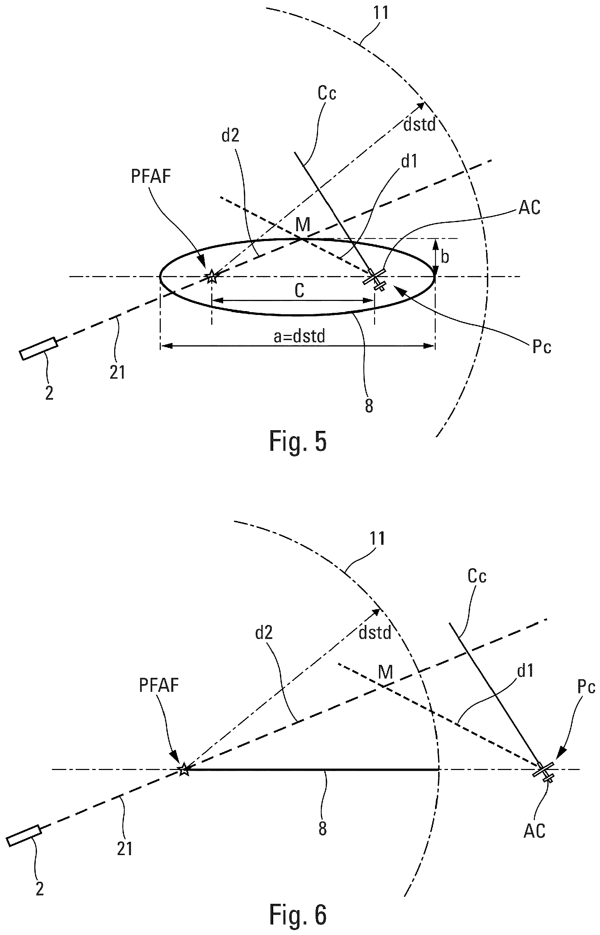

Comme représenté sur la figure 4 et la figure 5, la première ellipse 8 présente un foyer F1 et un foyer F2. Le foyer F1 correspond à la position courante Pc de l'aéronef AC. Le foyer F2 correspond à la projection de la position cible PFAF sur le plan horizontal. La première ellipse 8 présente également un grand axe a et un petit axe b. Le grand axe a est égal à la première distance dstd.

Le grand axe a, le petit axe b et la distance c entre les deux foyers F1 et F2 sont liés par la relation suivante :

[Math 1]

$$b = \sqrt{a^2 - c^2}$$

Le dispositif d'aide au pilotage 1 peut comprendre également un module d'affichage 6 comportant un écran 5.

Un signal représentatif de la première ellipse 8 est transmis au module d'affichage 6 grâce à une liaison L1 afin que la première ellipse 8 soit affichée sur l'écran 5 du module d'affichage 6. Une liaison L2 peut également permettre la transmission des éléments déterminés par le module de détermination 4 à un dispositif utilisateur.

La forme de la première ellipse 8 permet de connaître l'importance de la sur-énergie de l'aéronef AC. La sur-énergie correspond à l'énergie en excédant que présente l'aéronef AC par rapport à l'énergie qu'il devrait présenter selon la stratégie d'approche choisie.

Il est alors possible de manœuvrer l'aéronef AC de manière appropriée afin de dissiper l'énergie en excédent.

Dans les exemples ci-dessous, on considère que la première stratégie correspond à une stratégie d'approche standard.

Lorsque la distance c entre la position courante Pc de l'aéronef AC et la projection sur le plan horizontal de la position cible PFAF est supérieure à la première distance dstd (figure 6), la première ellipse 8 se réduit à un segment de longueur égale à la première distance dstd. La direction de ce segment correspond à la droite joignant la position courant Pc de l'aéronef AC et la projection de la position cible PFAF. Une extrémité libre de ce segment correspond à la position cible PFAF. Si l'aéronef prenait une trajectoire directe vers la position cible PFAF, il serait sous le profil standard. Il serait donc en sous-énergie. L'aéronef AC peut alors rester à son altitude courante et suivre n'importe quelle trajectoire convergente vers l'axe 21 de la piste d'atterrissage 2 pour rejoindre le profil standard par-dessous avant de débuter la descente vers la piste d'atterrissage 2.

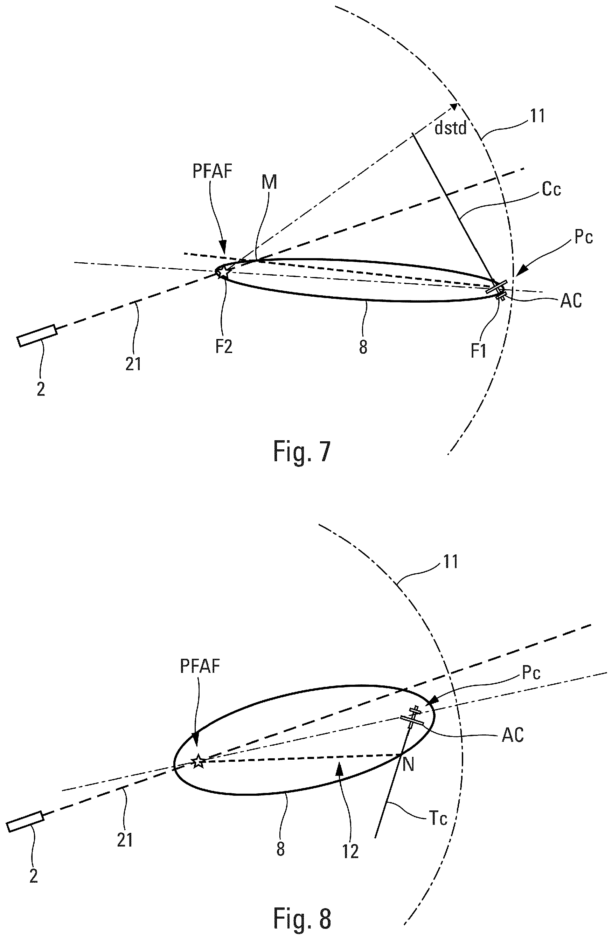

Lorsque la distance entre la position courante Pc de l'aéronef AC et la projection sur le plan horizontal de la position cible PFAF est inférieure à la première distance dstd (figure 7), une trajectoire directe vers la position cible PFAF en suivant une procédure d'approche standard selon la stratégie standard ne suffit plus. La trajectoire doit être allongée. Le petit axe b augmente donc la première ellipse 8 commence à s'élargir même si elle reste encore très plate car la distance entre les deux foyers F1 et F2 est proche du grand axe a qui correspond à la première distance dstd. L'intersection M de la première ellipse 8 avec l'axe 21 de la piste d'atterrissage 2 indique le point qu'il faut viser sur l'axe 21 de la piste d'atterrissage 2 en suivant la procédure d'approche standard pour dissiper l'énergie de façon appropriée.

Sur la figure 7, l'aéronef AC est en légère sur-énergie à l'instant courant.

Si l'aéronef AC continue à suivre son cap courant Cc sans descendre, sa situation énergétique va se dégrader car il se rapproche de la position cible PFAF sans descendre.

S'il continue à suivre son cap courant Cc en descendant, la première distance dstd diminuant avec l'altitude de l'aéronef AC, son énergie va varier en fonction de la façon dont descend l'aéronef AC. Ainsi, s'il descend selon la procédure d'approche standard ou de manière plus accentuée que la procédure d'approche standard, la sur-énergie est dissipée. Le cercle 11 de rayon égale à la première distance dstd et de centre correspondant à la projection de la position cible PFAF passe entre la position courante Pc de l'aéronef AC et la projection de la position cible PFAF. S'il descend de manière moins accentuée que la procédure d'approche standard ou s'il reste bloqué à l'altitude courante, sa situation énergétique va se dégrader. En effet, si l'aéronef AC ne descend pas, la première distance dstd ne varie pas alors que, l'aéronef AC continuant à progresser le long de son cap courant, il se rapproche de la position cible PFAF. Donc, la distance c entre les deux foyers F1 et F2 diminue et le grand axe b augmente. Ainsi, la première ellipse 8 grossit à mesure que l'énergie de l'aéronef AC augmente par rapport à ce qu'elle devrait être si l'aéronef AC suivait la procédure d'approche standard le long de la trajectoire directe vers la position cible PFAF. Par exemple, l'aéronef AC peut ne pas descendre s'il est bloqué en altitude par le contrôleur aérien ATC.

Si l'aéronef AC passe à la verticale de la position cible PFAF sans perdre d'altitude, la première ellipse 8 présente la forme d'un cercle 11 centré sur la projection de la position cible PFAF et de rayon égale à la première distance dstd.

Si l'aéronef AC entame une descente en suivant la procédure d'approche standard, la première distance dstd diminue avec l'altitude de l'aéronef AC. Au moins deux situations peuvent alors se présenter.

Dans une première situation, l'aéronef AC est contraint à suivre un cap de consigne fourni par le contrôleur aérien ATC. Cette contrainte de cap entraîne une variation moindre de la distance jusqu'à la position cible PFAF par rapport à une trajectoire directe vers la position cible PFAF. La première distance dstd (le grand axe a) va diminuer plus rapidement que la distance c entre les deux foyers F1 et F2 et le petit axe b diminue. La première ellipse 8 se contracte ; ce qui indique au pilote que la sur-énergie de l'aéronef AC diminue.

Dans une deuxième situation, l'aéronef AC est autorisé à se poser par le contrôleur aérien ATC. Si l'aéronef AC prend un cap vers le point d'intersection entre la première ellipse 8 et l'axe 21 de la piste d'atterrissage 2, le grand axe a va diminuer plus rapidement que la distance C entre les deux foyers F1 et F2 car l'aéronef AC ne suit pas la trajectoire directe vers la position cible PFAF. La première ellipse 8 s'aplatit progressivement et le grand axe a diminue au fur et à mesure que l'aéronef AC s'approche de la position cible PFAF. Tant que l'aéronef AC n'a pas atteint la position cible PFAF, la première ellipse 8 se réduit jusqu'à un segment [Pc, PFAF] limité, d'un côté, par la position courante Pc de l'aéronef AC et, de l'autre côté, par la projection de la position cible PFAF. Lorsque l'aéronef AC atteint la position cible PFAF à l'altitude standard, la première ellipse 8 se réduit à un point.

Ainsi, la première ellipse 8 permet au pilote :

- d'avoir conscience de la situation énergétique de l'aéronef AC, en particulier, de se rendre compte de l'importance de la sur-énergie de l'aéronef AC par rapport à l'énergie appropriée pour une descente selon la procédure d'approche standard,
- d'indiquer les points autour de l'aéronef AC où l'aéronef AC devrait prendre un cap direct vers la position cible PFAF une fois libéré par le contrôleur aérien ATC du cap courant auquel il est contraint en suivant la procédure d'approche standard pour se poser dans de bonnes conditions,
- de moduler son taux de descente sur la trajectoire identifiée directement sur la carte (cap courant jusqu'à la première ellipse 8 puis cap direct vers la position cible PFAF) pour résorber la sur-énergie de l'aéronef AC : la première ellipse 8 s'aplatit plus ou moins rapidement en fonction du taux de descente choisi jusqu'à devenir le segment [Pc, PFAF] quand l'aéronef AC rejoint le profil standard.

Selon une première variante de réalisation, le module de détermination 4 est en outre configuré pour déterminer un point d'intersection M entre la première ellipse 8 et une projection de l'axe 21 de la piste d'atterrissage 2. Un signal représentatif du point d'intersection est alors transmis au module d'affichage 6 afin que le point d'intersection M soit affiché sur l'écran 5 du module d'affichage 6. Les figures 4 à 7 représentent le point d'intersection M.

Selon une deuxième variante de réalisation, un signal représentatif d'un segment d1 entre le foyer F1 et le point d'intersection M et d'un segment d2 entre le point d'intersection M et le deuxième foyer F2 est transmis au module d'affichage 6 afin que le segment d1 et le segment d2 soient affichés sur l'écran 5 du module d'affichage 6 (figure 5). Ce troisième mode de réalisation propose une trajectoire selon les deux segments d1 et d2. Le pilote peut valider ou non valider la trajectoire proposée à partir d'une interface homme-machine.

Selon une troisième variante de réalisation, le module de détermination 4 est en outre configuré pour déterminer une consigne de cap à partir du point d'intersection M. Un signal représentatif de la consigne de cap est alors transmis au module d'affichage 6 afin que la consigne de cap soit affichée sur l'écran 5 du module d'affichage 6 sur une échelle de cap affichée également sur l'écran 5 du module d'affichage 6.

Selon une quatrième variante de réalisation, le module de détermination 4 est en outre configuré pour déterminer un compte à rebours correspond à un temps restant à parcourir par l'aéronef AC entre sa position courante Pc et le point l'intersection M alors que l'aéronef AC suit le cap de consigne. Un signal représentatif du compte à rebours est transmis au module d'affichage 6 afin que le compte à rebours soit affiché sur l'écran 5 du module d'affichage 6. L'affichage du compte à rebours peut être un affichage d'un compte à rebours en secondes. Le compte à rebours permet d'indiquer au pilote à quel moment prendre le cap vers la position cible PFAF.

Selon une cinquième variante de réalisation, le module de détermination 4 est en outre configuré pour déterminer une distance à parcourir qui correspond à une distance restant à parcourir par l'aéronef AC entre sa position courante Pc et le point l'intersection M alors que l'aéronef AC suit le cap de consigne. Un signal représentatif de la distance à parcourir est alors transmis au module d'affichage 6 afin que la distance à parcourir soit affichée sur l'écran 5 du module d'affichage 6.

Selon une sixième variante de réalisation, le module de détermination 4 est en outre configuré pour déterminer un taux de descente à partir d'une variation relative de la première distance dstd (grand axe a) par rapport à la distance entre la position courante Pc et la position cible PFAF (distance c entre le premier foyer F1 et le deuxième foyer F2). Cette variation relative a donc pour expression : $(a - c) / c$. Un signal représentatif du taux de descente est alors transmis au module d'affichage 6 afin que le taux d'affichage soit affiché sur l'écran 5 du module d'affiche 6 sur une échelle de vitesse verticale affichée également sur l'écran 5 du module d'affichage 6.

Selon une septième variante de réalisation (figure 8), le module de détermination 4 est en outre configuré pour déterminer une trajectoire de rejointe optimale 12 vers la position cible Pc si l'aéronef AC présente une trajectoire courante Tc qui diverge de l'axe 21 de la piste d'atterrissage 2. La trajectoire de rejointe optimale 12 présente une distance égale à la première distance dstd. De plus, la trajectoire de rejointe optimale 12 passe par un point d'intersection N entre la première ellipse 8 et la trajectoire courante Tc. Un signal représentatif de la trajectoire de rejointe optimale 12 est alors transmis au module d'affichage 6 afin que ladite trajectoire de rejointe optimale 12 soit affichée sur l'écran 5 du module d'affichage 6.

Selon une huitième variante de réalisation, le dispositif d'aide au pilotage 1 comprend un module de détermination 13 configuré pour déterminer une deuxième distance entre l'état cible et l'état courant à partir d'une deuxième stratégie d'approche. Le module de détermination 13 est également configuré pour déterminer une deuxième ellipse comprise dans le plan horizontal dans lequel évolue l'aéronef AC. La deuxième ellipse est formée de points déterminés de façon qu'une somme, d'une part, d'une distance entre la position courante Pc de l'aéronef et les points de la deuxième ellipse et, d'autre part, d'une distance entre les points de la deuxième ellipse et une projection sur le plan horizontal de la position cible PFAF est égale à la deuxième distance. Un signal représentatif de la deuxième ellipse est alors transmis au module d'affichage 6 afin que ladite deuxième ellipse soit affichée sur l'écran 5 du module d'affichage 6.

La deuxième stratégie d'approche peut correspondre à une stratégie d'approche limite. En particulier, la deuxième stratégie permet de donner à l'équipage des informations sur le point à ne pas dépasser et la trajectoire correspondante à partir de la position courante Pc de l'aéronef AC pour éviter de devoir remettre les gaz, faute de pouvoir dissiper l'énergie résiduelle de l'aéronef AC jusqu'à la position cible PFAF.

Selon une neuvième variante de réalisation, le module de détermination 4 est en outre configuré pour déterminer une sur-énergie de l'aéronef AC par rapport à une énergie prédite selon la première stratégie. La sur-énergie peut être déterminée en fonction de la dimension du petit axe b de l'ellipse 8. Plus le petit axe b est grand, plus la sur-énergie est grande. Une jauge d'énergie peut alors être déterminée afin de représenter un réservoir plus ou moins plein selon une quantité de sur-énergie. Plus la sur-énergie présente une quantité importante, plus le réservoir de la jauge d'énergie est plein. Un signal représentatif de la jauge d'énergie est transmis au module d'affichage 6 afin que la jauge d'énergie soit affichée sur l'écran 5 du module d'affichage 6.

Selon une dixième variante de réalisation, le module de détermination 4 est en outre configuré pour déterminer une sur-énergie de l'aéronef AC par rapport à une énergie prédite selon la première stratégie. Comme pour la neuvième variante de réalisation, la sur-énergie peut être déterminée en fonction de la dimension du petit axe b de l'ellipse 8. Une indication numérique représentative de la sur-énergie étant déterminée à partir de la sur-énergie. Par exemple, l'indication numérique est égale à « 0 » si la dissipation d'énergie se fait conformément à la première stratégie. L'indication numérique est égale à « 1 » si la dissipation d'énergie est réalisée selon une procédure de descente limite. L'indication numérique peut être égale à une valeur entre « 0 » et « 1 » si la dissipation d'énergie est réalisée selon une procédure de descente entre la première stratégie et la procédure de descente limite. Un signal représentatif de l'indication numérique est transmis au module d'affichage 6 afin que l'indication numérique soit affichée sur l'écran 5 du module d'affichage 6.

L'invention concerne également un procédé d'aide au pilotage d'un aéronef AC lors d'une approche de l'aéronef AC, en vue d'un atterrissage sur une piste d'atterrissage 2 (figure 2).

Le procédé d'aide au pilotage comporte les étapes suivantes mises en œuvre de façon itérative :

- une étape E1 de détermination, mise en œuvre par le module de détermination 3, consistant à déterminer un état courant de l'aéronef AC, l'état courant comprenant au moins une position courante Pc de l'aéronef AC ;
- une étape E2 de détermination, mise en œuvre par le module de détermination 4, consistant à déterminer une première distance dstd entre un état cible et l'état courant à partir de la première stratégie d'approche ;
- une étape E3 de détermination, mise en œuvre par le module de détermination 4, consistant à déterminer la première ellipse 8 comprise dans un plan horizontal dans lequel évolue l'aéronef AC, la première ellipse 8 étant formée de points déterminés de façon qu'une somme, d'une part, d'une distance d1 entre la position courante Pc de l'aéronef AC et les points de la première ellipse 8 et, d'autre part, d'une distance d2 entre les points de la première ellipse 8 et une projection sur le plan horizontal de la position cible PFAF est égale à la première distance dstd ;
- une étape E14 d'affichage, mise en œuvre par le module d'affichage 6, comprenant l'affichage au moins de la première ellipse 8 sur l'écran 5 du module d'affichage 6.

L'étape E14 d'affichage peut comprendre en outre l'affichage du premier foyer F1 et du deuxième foyer F2 de la première ellipse 8.

Selon la première variante de réalisation, le procédé d'aide au pilotage comprend une étape E4 de détermination, mise en œuvre par le module de détermination 4, consistant à déterminer le point d'intersection M entre la première ellipse 8 et la projection de l'axe 21 de la piste d'atterrissage 2. L'étape E14 d'affichage comprend en outre l'affichage du point d'intersection M sur l'écran 5 du module d'affichage 6.

Selon la deuxième variante de réalisation, l'étape E14 d'affichage comprend en outre l'affichage du premier segment entre le foyer F1 et le point d'intersection M et du deuxième segment entre le point d'intersection M et le deuxième foyer F2.

Selon la troisième variante de réalisation, le procédé d'aide au pilotage peut comprendre une étape E5 de détermination, mise en œuvre par le module de détermination 4, consistant à déterminer une consigne de cap à partir du point d'intersection M. L'étape E14 d'affichage comprend alors l'affichage de la consigne de cap sur une échelle de cap.

Selon la quatrième variante de réalisation, le procédé d'aide au pilotage comprend une étape E6 de détermination, mise en œuvre par le module de détermination 4 consistant à déterminer un compte à rebours correspondant à un temps restant à parcourir par l'aéronef AC entre la position courante Pc de l'aéronef AC et le point d'intersection M alors que l'aéronef AC suit la consigne de cap. L'étape E14 d'affichage comprend alors l'affichage du compte à rebours.

Selon la cinquième variante de réalisation, le procédé d'aide au pilotage comprend une étape E7 de détermination, mise en œuvre par le module de détermination 4, consistant à déterminer une distance correspondant à une distance restant à parcourir par l'aéronef AC entre la position courante Pc de l'aéronef AC et le point d'intersection M alors que l'aéronef AC suit la consigne de cap. L'étape E14 d'affichage comprend alors l'affichage de la distance à parcourir.

Selon la sixième variante de réalisation, le procédé d'aide au pilotage comprend une étape E8 de détermination, mise en œuvre par le module de détermination 4, consistant à déterminer un taux de descente à partir de la première distance dstd par rapport à la distance entre la position courante Pc et la position cible PFAF. L'étape E14 d'affichage comprend alors l'affichage du taux de descente sur une échelle de vitesse verticale.

Selon la septième variante de réalisation, le procédé d'aide au pilotage comprend une étape E9 de détermination, mise en œuvre par le module de détermination 4, consistant à déterminer la trajectoire de rejointe optimale 12 vers la position cible Pc si l'aéronef AC présente une trajectoire courante Tc qui diverge de l'axe 21 de la piste d'atterrissage 2. L'étape E14 d'affichage comprend alors l'affichage de la trajectoire de rejointe optimale 12.

Selon la huitième variante de réalisation, le procédé d'aide au pilotage comprend également :

- une étape E10 de détermination, mise en œuvre par un module de détermination 13, consistant à déterminer la deuxième distance entre l'état cible et l'état courant à partir de la deuxième stratégie d'approche ;
- une étape E11 de détermination, mise en œuvre par le module de détermination 13, consistant à déterminer la deuxième ellipse comprise dans le plan horizontal dans lequel évolue l'aéronef AC.

L'étape E14 d'affichage comprend alors l'affichage de la deuxième ellipse.

Selon la neuvième variante de réalisation, le procédé d'aide de pilotage comprend une étape E12 de détermination, mise en œuvre par le module de détermination 4, consistant à déterminer la sur-énergie de l'aéronef AC par rapport à une dissipation d'énergie selon la première stratégie. La jauge d'énergie peut alors être déterminée. L'étape E14 d'affichage comprend alors l'affichage de la jauge d'énergie.

Selon la dixième variante de réalisation, le procédé d'aide au pilotage comprend une étape E13 de détermination, mise en œuvre par le module de détermination 4, consistant à déterminer la sur-énergie de l'aéronef AC par rapport à une dissipation de l'énergie selon la première stratégie. La sur-énergie est déterminée en fonction de la dimension du petit axe b de l'ellipse 8. L'indication numérique représentative de la sur-énergie est déterminée à partir de la sur-énergie. L'étape E14 d'affichage comprend alors l'affichage de l'indication numérique.

**Revendications**

1. Procédé d'aide au pilotage d'un aéronef (AC) lors d'une approche de l'aéronef (AC), en vue d'un atterrissage sur une piste d'atterrissage (2),
   **caractérisé en ce qu'**il comporte les étapes suivantes mises en œuvre de façon itérative :

   - une première étape (E1) de détermination, mise en œuvre par un premier module de détermination (3), consistant à déterminer un état courant de l'aéronef (AC), l'état courant comprenant au moins une position courante (Pc) de l'aéronef (AC) ;
   - une deuxième étape (E2) de détermination, mise en œuvre par un deuxième module de détermination (4), consistant à déterminer une première distance (dstd) entre un état cible et l'état courant à partir d'une première stratégie d'approche ;
   - une troisième étape (E3) de détermination, mise en œuvre par le deuxième module de détermination (4), consistant à déterminer une première ellipse (8) comprise dans un plan horizontal dans lequel évolue l'aéronef (AC), la première ellipse (8) étant formée de points déterminés de façon qu'une somme, d'une part, d'une distance (d1) entre la position courante (Pc) de l'aéronef (AC) et les points de la première ellipse (8) et, d'autre part, d'une distance (d2) entre les points de la première ellipse (8) et une projection sur le plan horizontal de la position cible (PFAF) est égale à la première distance (dstd) ;
   - une étape (E14) d'affichage, mise en œuvre par un module d'affichage (6), comprenant l'affichage au moins de la première ellipse (8) sur un écran (5) du module d'affichage (6).

**2.** Procédé selon la revendication 1, **caractérisé en ce que** la première ellipse (8) présente un premier foyer (F1) et un deuxième foyer (F2), le premier foyer (F1) correspondant à la position courante (Pc) de l'aéronef (AC) et le deuxième foyer (F2) correspondant à la projection de la position cible (PFAF) sur le plan horizontal, la première ellipse (8) présentant également un grand axe (a) et un petit axe (b), le grand axe (a) étant égal à la première distance (dstd), l'étape (E14) d'affichage comprenant en outre l'affichage du premier foyer (F1) et du deuxième foyer (F2).

**3.** Procédé selon l'une quelconque des revendications 1 ou 2, **caractérisé en ce qu'**il comprend une quatrième étape (E4) de détermination, mise en œuvre par le deuxième module de détermination (4), consistant à déterminer un point d'intersection (M) entre la première ellipse (8) et une projection d'un axe (21) de la piste d'atterrissage (2), l'étape (E14) d'affichage comprend en outre l'affichage du point d'intersection (M) sur l'écran (5) du module d'affichage (6).

**4.** Procédé selon l'une quelconque des revendications 1 ou 3, **caractérisé en ce que** l'étape (E14) d'affichage comprend en outre l'affichage d'un premier segment entre le premier foyer (F1) et le point d'intersection (M) et d'un deuxième segment entre le point d'intersection (M) et le deuxième foyer (F2).

**5.** Procédé selon l'une quelconque des revendications 1 à 4, **caractérisé en ce qu'**il comprend une cinquième étape (E5) de détermination, mise en œuvre par le deuxième module de détermination (4), consistant à déterminer une consigne de cap à partir du point d'intersection (M), l'étape (E14) d'affichage comprenant en outre l'affichage de la consigne de cap sur une échelle de cap.

**6.** Procédé selon la revendication 5, **caractérisé en ce qu'**il comprend une sixième étape (E6) de détermination, mise en œuvre par le deuxième module de détermination (4) consistant à déterminer un compte à rebours correspondant à un temps restant à parcourir par l'aéronef (AC) entre la position courante (Pc) de l'aéronef (AC) et le point d'intersection (M) alors que l'aéronef (AC) suit la consigne de cap, l'étape (E14) d'affichage comprenant en outre l'affichage du compte à rebours.

**7.** Procédé selon la revendication 5, **caractérisé en ce qu'**il comprend une septième étape (E7) de détermination, mise en œuvre par le deuxième module de détermination (4) consistant à déterminer une distance correspondant à une distance restant à parcourir par l'aéronef (AC) entre la position courante (Pc) de l'aéronef (AC) et le point d'intersection (M) alors que l'aéronef (AC) suit la consigne de cap, l'étape (E14) d'affichage comprenant en outre l'affichage de la distance à parcourir.

**8.** Procédé selon l'une quelconque des revendications 1 à 7, **caractérisé en ce qu'**il comprend une huitième étape (E8) de détermination, mise en œuvre par le deuxième module de détermination (4), consistant à déterminer un taux de descente à partir d'une variation relative de la première distance (dstd) par rapport à la distance entre la position courante (Pc) et la position cible (PFAF), l'étape (E14) d'affichage comprenant en outre l'affichage du taux de descente sur une échelle de vitesse verticale.

**9.** Procédé selon l'une quelconque des revendications 1 à 8, **caractérisé en ce qu'**il comprend une neuvième étape (E9) de détermination, mise en œuvre par le deuxième module de détermination (4), consistant à déterminer une trajectoire de rejointe optimale vers la position cible (Pc) si l'aéronef (AC) présente une trajectoire courante (Tc) qui diverge de l'axe (21) de la piste d'atterrissage (2), la trajectoire de rejointe optimale présentant une distance égale à la première distance (dstd), la trajectoire de rejointe optimale passant par un point d'intersection (N) entre la première ellipse (8) et la trajectoire courante (Tc), l'étape (E14) d'affichage comprenant en outre l'affichage de la trajectoire de rejointe optimale.

**10.** Procédé selon l'une quelconque des revendications 1 à 9, **caractérisé en ce qu'**il comprend :

- une dixième étape (E10) de détermination, mise en œuvre par un troisième module de détermination (13), consistant à déterminer une deuxième distance entre l'état cible et l'état courant à partir d'une deuxième stratégie d'approche ;
- une onzième étape (E11) de détermination, mise en œuvre par le troisième module de détermination (13), consistant à déterminer une deuxième ellipse comprise dans le plan horizontal dans lequel évolue l'aéronef (AC), la deuxième ellipse étant formée de points déterminés de façon qu'une somme, d'une part, d'une distance entre la position courante (Pc) de l'aéronef et les points de la deuxième ellipse et, d'autre part, d'une distance entre les points de la deuxième ellipse et une projection sur le plan horizontal de la position cible (PFAF) est égale à la deuxième distance ;
l'étape (E14) d'affichage comprenant en outre l'affichage de la deuxième ellipse.

**11.** Procédé selon l'une quelconque des revendications 1 à 10,
**caractérisé en ce qu'**il comprend une douzième étape (E12) de détermination, mise en œuvre par le deuxième module de détermination (4), consistant à déterminer une sur-énergie de l'aéronef (AC) par rapport à une énergie prédite selon la première stratégie, la sur-énergie étant déterminée en fonction de la dimension du petit axe (b) de l'ellipse (8), une jauge d'énergie étant déterminée à partir de la sur-énergie,
l'étape (E14) d'affichage comprenant en outre l'affichage de la jauge d'énergie.

**12.** Procédé selon l'une quelconque des revendications 1 à 11,
**caractérisé en ce qu'**il comprend une treizième étape (E13) de détermination, mise en œuvre par le deuxième module de détermination (4), consistant à déterminer une sur-énergie de l'aéronef (AC) par rapport à une énergie prédite selon la première stratégie, la sur-énergie étant déterminée en fonction de la dimension du petit axe (b) de l'ellipse (8), une indication numérique représentative de la sur-énergie étant déterminée à partir de la sur-énergie,
l'étape (E14) d'affichage comprenant en outre l'affichage de l'indication numérique.

**13.** Dispositif d'aide au pilotage d'un aéronef (AC) lors d'une approche de l'aéronef (AC), en vue d'un atterrissage sur une piste d'atterrissage (2),
**caractérisé en ce qu'**il comporte :

- un premier module de détermination (3) configuré pour déterminer un état courant de l'aéronef (AC), l'état courant comprenant au moins une position courante (Pc) de l'aéronef (AC) ;
- un deuxième module de détermination (4) configuré pour :

• déterminer une première distance (dstd) entre un état cible (PFAF) et l'état courant (Pc) à partir d'une première stratégie d'approche ;
• déterminer une première ellipse (8) comprise dans un plan horizontal dans lequel évolue l'aéronef (AC), la première ellipse (8) étant formée de points déterminés de façon qu'une somme, d'une part, d'une distance (d1) entre la position courante (Pc) de l'aéronef (AC) et les points de la première ellipse (8) et, d'autre part, d'une distance (d2) entre les points de la première ellipse (8) et une projection sur le plan horizontal de la position cible (PFAF) est égale à la première distance (dstd) ;

- un module d'affichage (6) comportant un écran (5), le module d'affichage (6) étant configuré pour afficher au moins la première ellipse (8) sur l'écran (5).

**14.** Dispositif selon la revendication 12,
**caractérisé en ce que** le deuxième module de détermination (4) est en outre configuré pour déterminer un point d'intersection (M) entre la première ellipse (8) et une projection d'un axe (21) de la piste d'atterrissage (2).

**15.** Aéronef,
**caractérisé en ce qu'**il comporte un dispositif d'aide au pilotage (1) selon l'une quelconque des revendications 13 et 14.

**Patentansprüche**

**1.** Verfahren zur Unterstützung beim Steuern eines Luftfahrzeugs (AC) bei einem Landeanflug des Luftfahrzeugs (AC) auf eine Landebahn (2), **dadurch gekennzeichnet, dass** es die folgenden Schritte umfasst, die iterativ durchgeführt werden:

- einen ersten Schritt (E1) des Bestimmens, der von einem ersten Bestimmungsmodul (3) durchgeführt wird, der darin besteht, einen aktuellen Zustand des Luftfahrzeugs (AC) zu bestimmen, wobei der aktuelle Zustand mindestens eine aktuelle Position (Pc) des Luftfahrzeugs (AC) umfasst;
- einen zweiten Schritt (E2) des Bestimmens, der von einem zweiten Bestimmungsmodul (4) durchgeführt wird, der darin besteht, eine erste Entfernung (dstd) zwischen einem Zielzustand und dem aktuellen Zustand anhand einer ersten Anflugstrategie zu bestimmen;
- einen dritten Schritt (E3) des Bestimmens, der von dem zweiten Bestimmungsmodul (4) durchgeführt wird, der darin besteht, eine erste Ellipse (8) zu bestimmen, die in einer horizontalen Ebene liegt, in der sich das Luftfahrzeug (AC) bewegt, wobei die erste Ellipse (8) von Punkten gebildet ist, die so bestimmt werden, dass eine Summe einer Entfernung (d1) zwischen der aktuellen Position (Pc) des Luftfahrzeugs (AC) und den Punkten der ersten Ellipse (8) einerseits und einer Entfernung (d2) zwischen den Punkten der ersten Ellipse (8) und einer Projektion der Zielposition (PFAF) auf der horizontalen Ebene andererseits gleich der ersten Entfernung (dstd) ist;
- einen Schritt (E14) des Anzeigens, der von einem Anzeigemodul (6) durchgeführt wird, umfassend das Anzeigen zumindest der ersten Ellipse (8) auf einem Bildschirm (5) des Anzeigemoduls (6).

2. Verfahren nach Anspruch 1, **dadurch gekennzeichnet, dass** die erste Ellipse (8) einen ersten Brennpunkt (F1) und einen zweiten Brennpunkt (F2) aufweist, wobei der erste Brennpunkt (F1) der aktuellen Position (Pc) des Luftfahrzeugs (AC) und der zweite Brennpunkt (F2) der Projektion der Zielposition (PFAF) auf der horizontalen Ebene entspricht, wobei die erste Ellipse (8) ebenfalls eine lange Achse (a) und eine kurze Achse (b) aufweist, wobei die lange Achse (a) gleich der ersten Entfernung (dstd) ist, wobei der Schritt (E14) des Anzeigens ferner das Anzeigen des ersten Brennpunkts (F1) und des zweiten Brennpunkts (F2) umfasst.

3. Verfahren nach einem der Ansprüche 1 oder 2, **dadurch gekennzeichnet, dass** es einen vierten Schritt (E4) des Bestimmens umfasst, der von dem zweiten Bestimmungsmodul (4) durchgeführt wird, der darin besteht, einen Schnittpunkt (M) zwischen der ersten Ellipse (8) und einer Projektion einer Achse (21) der Landebahn (2) zu bestimmen, wobei der Schritt (E14) des Anzeigens ferner das Anzeigen des Schnittpunkts (M) auf dem Bildschirm (5) des Anzeigemoduls (6) umfasst.

4. Verfahren nach einem der Ansprüche 1 oder 3, **dadurch gekennzeichnet, dass** der Schritt (E14) des Anzeigens ferner das Anzeigen eines ersten Segments zwischen dem ersten Brennpunkt (F1) und dem Schnittpunkt (M) und eines zweiten Segments zwischen dem Schnittpunkt (M) und dem zweiten Brennpunkt (F2) umfasst.

5. Verfahren nach einem der Ansprüche 1 bis 4, **dadurch gekennzeichnet, dass** es einen fünften Schritt (E5) des Bestimmens umfasst, der von dem zweiten Bestimmungsmodul (4) durchgeführt wird, der darin besteht, anhand des Schnittpunkts (M) eine Kursvorgabe zu bestimmen, wobei der Schritt (E14) des Anzeigens ferner das Anzeigen der Kursvorgabe auf einer Kursskala umfasst.

6. Verfahren nach Anspruch 5, **dadurch gekennzeichnet, dass** es einen sechsten Schritt (E6) des Bestimmens umfasst, der von dem zweiten Bestimmungsmodul (4) durchgeführt wird, der darin besteht, einen Countdown zu bestimmen, der einer Restflugzeit des Luftfahrzeugs (AC) zwischen der aktuellen Position (Pc) des Luftfahrzeugs (AC) und dem Schnittpunkt (M) entspricht, während das Luftfahrzeug (AC) der Kursvorgabe folgt, wobei der Schritt (E14) des Anzeigens ferner das Anzeigen des Countdowns umfasst.

7. Verfahren nach Anspruch 5, **dadurch gekennzeichnet, dass** es einen siebten Schritt (E7) des Bestimmens umfasst, der von dem zweiten Bestimmungsmodul (4) durchgeführt wird, der darin besteht, eine Entfernung zu bestimmen, die einer vom Luftfahrzeug (AC) noch zurückzulegenden Entfernung zwischen der aktuellen Position (Pc) des Luftfahrzeugs (AC) und dem Schnittpunkt (M) entspricht, während das Luftfahrzeug (AC) der Kursvorgabe folgt, wobei der Schritt (E14) des Anzeigens ferner das Anzeigen der zurückzulegenden Entfernung umfasst.

8. Verfahren nach einem der Ansprüche 1 bis 7, **dadurch gekennzeichnet, dass** es einen achten Schritt (E8) des Bestimmens umfasst, der von dem zweiten Bestimmungsmodul (4) durchgeführt wird, der darin besteht, eine Sinkrate anhand einer relativen Änderung der ersten Entfernung (dstd) bezogen auf die Entfernung zwischen der aktuellen Position (Pc) und der Zielposition (PFAF) zu bestimmen, wobei der Schritt (E14) des Anzeigens ferner das Anzeigen der Sinkrate auf einer Vertikalgeschwindigkeitsskala umfasst.

9. Verfahren nach einem der Ansprüche 1 bis 8, **dadurch gekennzeichnet, dass** es einen neunten Schritt (E9) des Bestimmens umfasst, der von dem zweiten Bestimmungsmodul (4) durchgeführt wird, der darin besteht, eine optimale Rückkehrflugbahn zur Zielposition (Pc) zu bestimmen, wenn das Luftfahrzeug (AC) eine aktuelle Flugbahn (Tc) aufweist, die von der Achse (21) der Landebahn (2) abweicht, wobei die optimale Rückkehrflugbahn eine Entfernung gleich der ersten Entfernung (dstd) aufweist, wobei die optimale Rückkehrflugbahn durch einen Schnittpunkt (N) zwischen der ersten Ellipse (8) und der aktuellen Flugbahn (Tc) verläuft, wobei der Schritt (E14) des Anzeigens ferner das Anzeigen der optimalen Rückkehrflugbahn umfasst.

10. Verfahren nach einem der Ansprüche 1 bis 9, **dadurch gekennzeichnet, dass** es Folgendes umfasst :

- einen zehnten Schritt (E10) des Bestimmens, der von einem dritten Bestimmungsmodul (13) durchgeführt wird, der darin besteht, eine zweite Entfernung zwischen dem Zielzustand und dem aktuellen Zustand anhand einer zweiten Anflugstrategie zu bestimmen;
- einen elften Schritt (E11) des Bestimmens, der von dem dritten Bestimmungsmodul (13) durchgeführt wird, der darin besteht, eine zweite Ellipse zu bestimmen, die in der horizontalen Ebene liegt, in der sich das Luftfahrzeug (AC) bewegt, wobei die zweite Ellipse von Punkten gebildet ist, die so bestimmt werden, dass eine Summe einer Entfernung zwischen der aktuellen Position (Pc) des Luftfahrzeugs und den Punkten der zweiten Ellipse einerseits und einer Entfernung zwischen den Punkten der zweiten Ellipse und einer Projektion der Zielposition (PFAF) auf der horizontalen Ebene andererseits gleich der zweiten Entfernung ist;

wobei der Schritt (E14) des Anzeigens ferner das Anzeigen der zweiten Ellipse umfasst.

11. Verfahren nach einem der Ansprüche 1 bis 10, **dadurch gekennzeichnet, dass** es einen zwölften Schritt (E12) des Bestimmens umfasst, der von dem zweiten Bestimmungsmodul (4) durchgeführt wird, der darin besteht, eine Überschussenergie des Luftfahrzeugs (AC) bezogen auf eine Energie zu bestimmen, die gemäß der ersten Strategie vorhergesagt wird, wobei die Überschussenergie in Abhängigkeit von der Abmessung der kurzen Achse (b) der Ellipse (8) bestimmt wird, wobei eine Energieanzeige anhand der Überschussenergie bestimmt wird, wobei der Schritt (E14) des Anzeigens ferner das Anzeigen der Energieanzeige umfasst.

12. Verfahren nach einem der Ansprüche 1 bis 11, **dadurch gekennzeichnet, dass** es einen dreizehnten Schritt (E13) des Bestimmens umfasst, der von dem zweiten Bestimmungsmodul (4) durchgeführt wird, der darin besteht, eine Überschussenergie des Luftfahrzeugs (AC) bezogen auf eine Energie zu bestimmen, die gemäß der ersten Strategie vorhergesagt wird, wobei die Überschussenergie in Abhängigkeit von der Abmessung der kurzen Achse (b) der Ellipse (8) bestimmt wird, wobei eine digitale Angabe, die für die Überschussenergie repräsentativ ist, anhand der Überschussenergie bestimmt wird, wobei der Schritt (E14) des Anzeigens ferner das Anzeigen der digitalen Angabe umfasst.

13. Vorrichtung zur Unterstützung beim Steuern eines Luftfahrzeugs (AC) bei einem Landeanflug des Luftfahrzeugs (AC) auf eine Landebahn (2), **dadurch gekennzeichnet, dass** sie Folgendes umfasst:

- ein erstes Bestimmungsmodul (3), das dazu ausgebildet ist, einen aktuellen Zustand des Luftfahrzeugs (AC) zu bestimmen, wobei der aktuelle Zustand mindestens eine aktuelle Position (Pc) des Luftfahrzeugs (AC) umfasst;
- ein zweites Bestimmungsmodul (4), das dazu ausgebildet ist:

• eine erste Entfernung (dstd) zwischen einem Zielzustand (PFAF) und dem aktuellen Zustand (Pc) anhand einer ersten Anflugstrategie zu bestimmen;
• eine erste Ellipse (8) zu bestimmen, die in einer horizontalen Ebene liegt, in der sich das Luftfahrzeug (AC) bewegt, wobei die erste Ellipse (8) von Punkten gebildet ist, die so bestimmt werden, dass eine Summe einer Entfernung (d1) zwischen der aktuellen Position (Pc) des Luftfahrzeugs (AC) und den Punkten der ersten Ellipse (8) einerseits und einer Entfernung (d2) zwischen den Punkten der ersten Ellipse (8) und einer Projektion der Zielposition (PFAF) auf der horizontalen Ebene andererseits gleich der ersten Entfernung (dstd) ist;

- ein Anzeigemodul (6), das einen Bildschirm (5) aufweist, wobei das Anzeigemodul (6) dazu ausgebildet ist, zumindest die erste Ellipse (8) auf dem Bildschirm (5) anzuzeigen.

14. Vorrichtung nach Anspruch 12, **dadurch gekennzeichnet, dass** das zweite Bestimmungsmodul (4) ferner dazu ausgebildet ist, einen Schnittpunkt (M) zwischen der ersten Ellipse (8) und einer Projektion einer Achse (21) der Landebahn (2) zu bestimmen.

15. Luftfahrzeug, **dadurch gekennzeichnet, dass** es eine Vorrichtung zur Unterstützung beim Steuern (1) nach einem der Ansprüche 13 und 14 aufweist.

**Claims**

1. Method for assisting in the piloting of an aircraft (AC) in an approach of the aircraft (AC), with a view to a landing on a landing runway (2), **characterized in that** it comprises the following steps implemented iteratively:

- a first determination step (E1), implemented by a first determination module (3), consisting in determining a current state of the aircraft (AC), the current state comprising at least one current position (Pc) of the aircraft (AC);
- a second determination step (E2), implemented by a second determination module (4), consisting in determining a first distance (dstd) between a target state and the current state from a first approach strategy;
- a third determination step (E3), implemented by the second determination module (4), consisting in determining a first ellipse (8) contained in a horizontal plane in which the aircraft (AC) is moving, the first ellipse (8) being formed by points determined in such a way that a sum, on the one hand, of a distance (d1) between the current position (Pc) of the aircraft (AC) and the points of the first ellipse (8) and, on the other hand, of a distance (d2) between the points of the first ellipse (8) and a projection onto the horizontal plane of the target position (PFAF) is equal to the first distance (dstd);

- a display step (E14), implemented by a display module (6), comprising the display of at least the first ellipse (8) on a screen (5) of the display module (6).

2. Method according to Claim 1, **characterized in that** the first ellipse (8) has a first focal point (F1) and a second focal point (F2), the first focal point (F1) corresponding to the current position (Pc) of the aircraft (AC) and the second focal point (F2) corresponding to the projection of the target position (PFAF) onto the horizontal plane, the first ellipse (8) also having a major axis (a) and a minor axis (b), the major axis (a) being equal to the first distance (dstd), the display step (E14) also comprising the display of the first focal point (F1) and of the second focal point (F2) .

3. Method according to either one of Claims 1 and 2, **characterized in that** it comprises a fourth determination step (E4), implemented by the second determination module (4), consisting in determining a point of intersection (M) between the first ellipse (8) and a projection of an axis (21) of the landing runway (2), the display step (E14) also comprises the display of the point of intersection (M) on the screen (5) of the display module (6) .

4. Method according to either one of Claims 1 and 3, **characterized in that** the display step (E14) also comprises the display of a first segment between the first focal point (F1) and the point of intersection (M) and of a second segment between the point of intersection (M) and the second focal point (F2).

5. Method according to any one of Claims 1 to 4, **characterized in that** the it comprises a fifth determination step (E5), implemented by the second determination module (4), consisting in determining a heading setpoint from the point of intersection (M), the display step (E14) also comprising the display of the heading setpoint on a heading scale.

6. Method according to Claim 5, **characterized in that** it comprises a sixth determination step (E6), implemented by the second determination module (4), consisting in determining a countdown corresponding to a time remaining to be travelled by the aircraft (AC) between the current position (Pc) of the aircraft (AC) and the point of intersection (M) while the aircraft (AC) follows the heading setpoint, the display step (E14) also comprising the display of the countdown.

7. Method according to Claim 5, **characterized in that** it comprises a seventh determination step (E7), implemented by the second determination module (4), consisting in determining a distance corresponding to a distance remaining to be travelled by the aircraft (AC) between the current position (Pc) of the aircraft (AC) and the point of intersection (M) while the aircraft (AC) follows the heading setpoint, the display step (E14) also comprising the display of the distance to be travelled.

8. Method according to any one of Claims 1 to 7, **characterized in that** it comprises an eight determination step (E8), implemented by the second determination module (4), consisting in determining a rate of descent from a relative variation of the first distance (dstd) with respect to the distance between the current position (Pc) and the target position (PFAF), the display step (E14) also comprising the display of the rate of descent on a vertical speed scale.

9. Method according to any one of Claims 1 to 8, **characterized in that** the it comprises a nineth determination step (E9), implemented by the second determination module (4), consisting in determining an optimum joining trajectory to the target position (Pc) if the aircraft (AC) has a current trajectory (Tc) which diverges from the axis (21) of the landing runway (2), the optimum joining trajectory having a distance equal to the first distance (dstd), the optimum joining trajectory passing through a point of intersection (N) between the first ellipse (8) and the current trajectory (Tc), the display step (E14) also comprising the display of the optimum joining trajectory.

10. Method according to any one of Claims 1 to 9, **characterized in that** it comprises:

    - a tenth determination step (E10), implemented by a third determination module (13), consisting in determining a second distance between the target state and the current state from a second approach strategy;
    - an eleventh determination step (E11), implemented by the third determination module (13), consisting in determining a second ellipse contained in the horizontal plane in which the aircraft (AC) is moving, the second ellipse being formed by points determined in such a way that a sum, on the one hand, of a distance between the current position (Pc) of the aircraft and the points of the second ellipse and, on the other hand, of a distance between the points of the second ellipse and a projection onto the horizontal plane of the target position (PFAF) is equal to the second distance;

    the display step (E14) also comprising the display of the second ellipse.

11. Method according to any one of Claims 1 to 10,

**characterized in that** it comprises a twelfth determination step (E12), implemented by the second determination module (4), consisting in determining an excess energy of the aircraft (AC) with respect to an energy predicted according to the first strategy, the excess energy being determined as a function of the dimension of the minor axis (b) of the ellipse (8), an energy gauge being determined from the excess energy, the display step (E14) also comprising the display of the energy gauge.

12. Method according to any one of Claims 1 to 11, **characterized in that** it comprises a thirteenth determination step (E13), implemented by the second determination module (4), consisting in determining an excess energy of the aircraft (AC) with respect to an energy predicted according to the first strategy, the excess energy being determined as a function of the dimension of the minor axis (b) of the ellipse (8), a numeric indication representative of the excess energy being determined from the excess energy, the display step (E14) also comprising the display of the numeric indication.

13. Device for assisting in the piloting of an aircraft (AC) in an approach of the aircraft (AC), with a view to a landing on a landing runway (2), **characterized in that** it comprises:

- a first determination module (3) configured to determine a current state of the aircraft (AC), the current state comprising at least one current position (Pc) of the aircraft (AC);
- a second determination module (4) configured to:

• determine a first distance (dstd) between a target state (PFAF) and the current state (Pc) from a first approach strategy;
• determine a first ellipse (8) contained in a horizontal plane in which the aircraft (AC) is moving, the first ellipse (8) being formed by points determined in such a way that a sum, on the one hand, of a distance (d1) between the current position (Pc) of the aircraft (AC) and the points of the first ellipse (8) and, on the other hand, of a distance (d2) between the points of the first ellipse (8) and a projection onto the horizontal plane of the target position (PFAF) is equal to the first distance (dstd);
• - a display module (6) comprising a screen (5), the display module (6) being configured to display at least the first ellipse (8) on the screen (5).

14. Device according to Claim 12, **characterized in that** the second determination module (4) is also configured to determine a point of intersection (M) between the first ellipse (8) and a projection of an axis (21) of the landing runway (2).

15. Aircraft, **characterized in that** it comprises a piloting assistance device (1) according to either one of Claims 13 and 14.

Fig. 1

Fig. 2

Fig. 3a

Fig. 3b

Fig. 4

Fig. 5

Fig. 6

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 2013124911 B

- EP 2161540 A